**Europäisches Patentamt**

**European Patent Office**

**Office européen des brevets**

(19)

(11) Veröffentlichungsnummer : **0 253 898 B1**

(12) # EUROPÄISCHE PATENTSCHRIFT

(45) Veröffentlichungstag der Patentschrift :
**24.07.91 Patentblatt 91/30**

(51) Int. Cl.⁵ : **A01C 7/00, A01C 7/04, A01C 15/04, A01D 91/02**

(21) Anmeldenummer : **87900737.5**

(22) Anmeldetag : **17.12.86**

(86) Internationale Anmeldenummer :
**PCT/SU86/00129**

(87) Internationale Veröffentlichungsnummer :
**WO 87/03776 02.07.87 Gazette 87/14**

(54) **LANDWIRTSCHAFTSMASCHINE.**

(30) Priorität : **24.12.85 SU 3989052**
**24.12.85 SU 3989053**
**24.12.85 SU 3989054**

(43) Veröffentlichungstag der Anmeldung :
**27.01.88 Patentblatt 88/04**

(45) Bekanntmachung des Hinweises auf die
Patenterteilung :
**24.07.91 Patentblatt 91/30**

(84) Benannte Vertragsstaaten :
**AT DE FR GB IT**

(56) Entgegenhaltungen :
**FR-A- 1 432 666**

(56) Entgegenhaltungen :
**FR-A- 2 299 244**
**FR-A- 2 455 849**
**GB-A- 2 021 728**
**US-A- 3 623 309**
**US-A- 4 371 305**

(73) Patentinhaber : **TREST 'JUZHVODOPROVOD'**
**ul. Gagarina, 135/1**
**Krasnodar, 350049 (SU)**

(72) Erfinder : **SHISHKIN, Viktor Vasilievich**
**ul. Festivalnaya, 16-5**
**Krasnodar, 350049 (SU)**

(74) Vertreter : **Finck, Dieter et al**
**Patentanwälte v. Füner, Ebbinghaus, Finck**
**Mariahilfplatz 2 & 3**
**W-8000 München 90 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Technisches Gebiet

Die vorliegende Erfindung bezieht sich auf das Gebiet des Landmaschinenbaus, genauer auf eine Landmaschine, die zur Aussaat von landwirtschaftlichen Kulturen und Saatenpflege sowie zur Pflanzenzucht unter Bedingungen eines künstlichen bzw. natürlichen Klimas bestimmt ist.

Darüber hinaus kann die Landmaschine zum Einbringen der Ernte bestimmt sein.

Zugrundeliegender Stand der Technik

Bekannt ist eine Technologie für Pflanzenzucht ohne Boden in wasserundurchlässigen Behältern mit Unterbringung der Wurzeln in einem Zonalsystem und Versorgung derselben mit einer Nährlösung, wobei auf die oberen Pflanzenteile mit einem ionisierten Luftstrom eingewirkt wird. Die Einrichtung zur Durchführung dieses Verfahrens enthält einen wasserundurchlässigen Behälter mit einem Zonensystem zur Unterbringung der Pflanzenwurzeln sowie Vorrichtungen zur Versorgung derselben mit einem Nähr- bzw. einem Ozon-Luft-Gemisch (siehe z.B. den SU-Urheberschein Nr. 897175, Klasse A 01 G 31/02, veröffentlicht 1980).

Ein Nachteil dieser Einrichtung besteht in ihrer niedrigen Arbeitsleistung und einem hohen Aufwand bei der Pflanzenzucht. Ihre technologischen Möglichkeiten sind begrenzt, weil die Einrichtung nur eine einzige Funktion, nämlich die Pflanzenaussaat, erfüllt.

Es ist ferner eine Landmaschine bekannt, die einen Rahmen einschliesst, auf dem ein Bunker für ein fliessbares Gut sowie eine Vorrichtung zur Beförderung des fliessbaren Gutes zum Arbeitsorgan für die Durchführung der technologischen Operationen auf dem Felde montiert sind, wobei der Motor aus einem Fräsarbeitsorgan besteht und hinter ihm eine reihenlose Streuvorrichtung angebracht ist, die über einen Samenleiter mit dem Dosierer eines Samenbunkers in Verbindung steht.

Die Streuvorrichtung ist in Form eines quer zur Bewegungsrichtung der Maschine horizontal angebrachten Rohres mit über dessen gesamte Länge verteilten Durchgangsbohrungen ausgeführt, wobei das Rohr mit einer Antriebsvorrichtung zum hin- und hergehenden Bewegen desselben entlang seiner Achse ausgestattet ist. (s. SU-Urheberschein Nr. 908262, IPK A 01 C 7/00, 1979). Diese Vorrichtung ist imstande, nur eine einzige technologische Operation, nämlich die Pflanzenaussaat, auszuführen, wobei sie einen hohen spezifischen Druck auf den Boden ausübt, weil sich der Rahmen über das Feld bewegt und verschiedene auf demselben befindliche Reagenzien sowie einen Vorrat an Samen bzw. Stecklingen mitführt, was eine Überverdichtung des Bodens bewirkt.

Zum Begiessen der Pflanzen, Einbringen von Düngemitteln in den Boden, Abernten sind weitere zusätzliche Landmaschinen erforderlich.

Offenbarung der Erfindung

Das Ziel der vorliegenden Erfindung ist die Beseitigung der vorerwähnten Nachteile der bekannten Maschinen.

Der Erfindung liegt die Aufgabe zugrunde, eine Landmaschine mit einer solchen Vorrichtung zur Beförderung des fliessbaren Gutes zu schaffen, das die Zuführung des Gutes zu jedem beliebigen Punkt des zu bearbeitenden Feldes unabhängig von der Bewegung des Landmaschinenrahmens gewährleisten würde.

Die gestellte Aufgabe ist dadurch gelöst, dass in der Landmaschine, die einen Rahmen enthält, der einen Bunker für das fliessbare Gut sowie eine Vorrichtung zur Beförderung des fliessbaren Gutes zum Arbeitsorgan für die Durchführung der technologischen Operationen auf dem Felde mitführt, vgl. SU-A-908262, erfindungsgemäss der Bunker und die Vorrichtung in einer luftdichten Kammer untergebracht sind, die einen Eingang und einen Ausgang besitzt, der Eingang mit einer Quelle eines dieser Kammer unter Druck zugeführten Arbeitsmittels in Verbindung steht, die Vorrichtung in Form einer Antriebstrommel mit einem auf dieselbe aufgewickelten flexiblen Schlauch ausgeführt ist, der in der luftdichten Kammer solcherweise angeordnet ist, dass sein Innenraum mit dem Bunker für das fliessbare Gut in Verbindung steht, wobei das freie Schlauchende durch den Kammerausgang hindurchgeführt, nach aussen umgestülpt und am Kammerumfang unter Bildung eines Ringraumes hermetisch befestigt ist, wobei der Ringraum unter der Wirkung des im Ringraum enthaltenen Arbeitsmittels sein Volumen verändert und das fliessbare Gut verschiebt.

Diese konstruktive Ausführung der Maschine gestattet es, die Zuführung des fliessbaren Gutes zu jedem beliebigen Punkt des zu bearbeitenden Feldes sicherzustellen, ohne den Rahmen der Landmaschine dabei bewegen zu müssen, wobei die technologischen Möglichkeiten derselben beträchtlich erweitert werden.

Zweckmässigerweise wird die Antriebstrommel auf der Welle reversierbar angebracht, was die Ausführung von Arbeitsoperationen auf dem Feld sowohl beim Hin- wie auch beim Rücklauf des Arbeitsorgans ermöglicht.

Der Bunker für das fliessbare Gut kann von den Innenwänden des Schlauchs gebildet sein, was die Kompaktheit der Vorrichtung erhöht und ihre Konstruktion vereinfacht.

Zur höheren Arbeitsleistung der Landmaschine und Erweiterung des Spektrums der anwendbaren fliessbaren Güter kann sie zusätzliche Bunker besitzen, die ausserhalb der luftdichten Kammer angebracht sind, und mit dem Schlauchinnenraum über die Hohlwelle der Trommel in Verbindung stehen.

Es empfiehlt sich, ein Zugelement mit seinen Enden am Schlauch zu befestigen. Dies erweitert die technologischen Möglichkeiten der Maschine, weil es möglich wird, verschiedene Arbeitsorgane, beispielsweise Transportbehälter, über das Feld bewegen zu können.

Zweckmässigerweise ist das Zugelement aus zwei Zweigen ausgeführt, was die Zugbelastung am transportierten Arbeitsorgan bei bestimmten Bodentypen zu erhöhen erlaubt.

Eine der Ausführungsformen der Landmaschine sieht eine kinematische Verbindung des Zugelementes mit dem Arbeitsorgan für die Durchführung der technologischen Operationen auf dem Felde vor, das in Form eines Transportbehälters mit vom Zugelement umschlungenen Rollen ausgebildet ist. Auf diese Weise wird es möglich, die Bergung der anstehenden Ernte unter gleichzeitiger Beförderung derselben zum Ladeplatz zu mechanisieren.

In einer weiteren Ausführungsform kann die Landmaschine einen zusätzlichen perforierten Schlauch enthalten, der koaxial zum ersteren liegt und mit einem seiner Enden an diesem befestigt ist, wobei das andere Ende des perforierten Schlauches in seiner Arbeitsstellung auf der Feldoberfläche befestigt ist. Eine solche Modifikation der Landmaschine erweitert den Bereich der für den Pflanzenanbau nach der für diese Maschine vorgesehenen Technologie geeigneten Territorien beträchtlich.

Zur besseren Abstimmung der auf dem Felde durchzuführenden technologischen Operationen kann der Transportbehälter aus zwei Sektionen bestehen, die beiderseits des Schlauches angebracht und durch ein radiales Messer untereinander verbunden sind, das mit der Aussenfläche des perforierten Schlauches kontaktiert. Darüber hinaus macht diese konstruktive Ausführung es möglich, verschiedene technologische Operationen in einer Maschine zu vereinigen und sie praktisch vollständig zu mechanisieren.

Insgesamt schafft die vorliegende Erfindung Voraussetzungen zum Einsatz derselben in verschiedenen Industrieund Wissenschaftszweigen, weil die Maschine ein geringes Gewicht besitzt, einfach in der Herstellung und zuverlässig im Betrieb ist. Sie sieht auch Komfortbedingungen für das Bedienungspersonal (die Bedienungsperson) vor. Einer der Hauptvorteile dieser Landmaschine liegt darin, dass in ihr mehrere auf dem zu bearbeitenden Feld auszuführende technologische Operationen vereinigt sind, darunter solche, die ohne Bewegung der eigentlichen Maschine über das Feld erfolgen.

## Kurze Beschreibung der Zeichnungen

Nachstehend ist ein konkretes Ausführungsbeispiel der erfindungsgemässen Landmaschine unter Bezugnahme auf beigefügte Zeichnungen angeführt, in denen es zeigt :

Fig. 1 schematische Darstellung der Gesamtansicht der Maschine im Längsschnitt ;

Fig. 2 Draufsicht der in der Kammer untergebrachten Trommel ;

Fig. 3 Ausführungsform der Maschine mit einem Zugelement und einem Transportbehälter ;

Fig. 4 Ausführungsform der Maschine mit einem perforierten Schlauch ;

Fig. 5 Ausführungsform der zum Einbringen der Ernte bestimmten Maschine.

## Ausführungsform der Erfindung

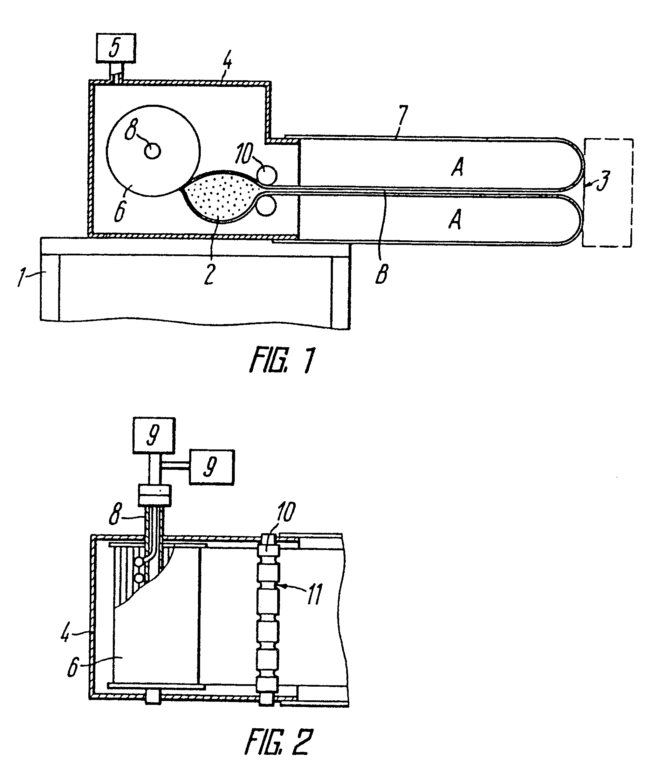

Die Landmaschine (Fig. 1) enthält einen kastenförmigen Rahmen 1, auf dem ein Bunker 2 für ein fliessbares Gut (beispielsweise Samen) sowie eine Vorrichtung zur Beförderung des fliessbaren Gutes zu einem Arbeitsorgan 3 für die Durchführung der technologischen Operationen auf dem Felde montiert sind. Als Arbeitsorgan kann eine beliebige bekannte Vorrichtung, beispielsweise ein Schar, eine Düse, ein Düngerstreuer usw. angewendet werden.

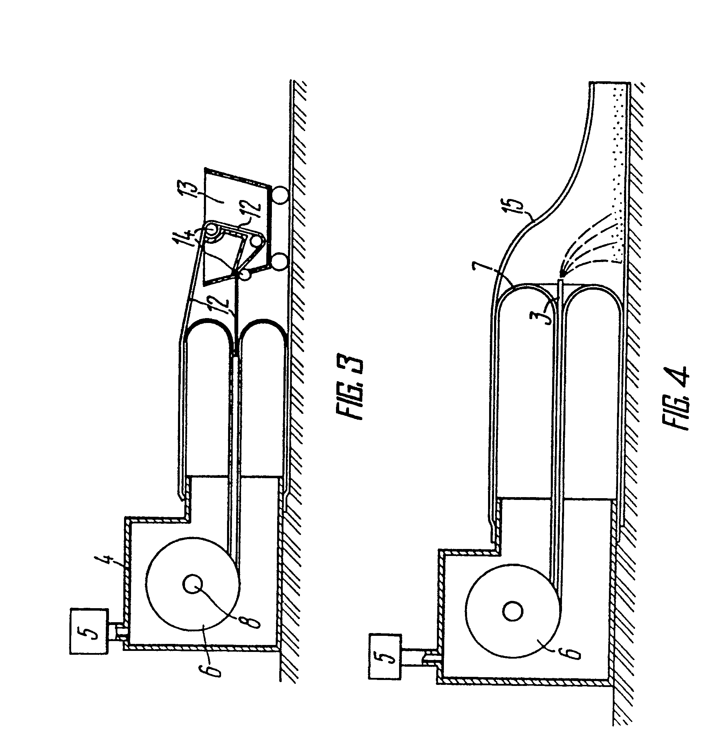

Der Bunker 2 ist in einer luftdichten Kammer 4 untergebracht, die einen Eingang besitzt, der mit einer Quelle 5 für ein Arbeitsmittel, beispielsweise ein Gas-Luft-Gemisch, in Verbindung steht, das der Kammer 4 unter Druck zugeführt wird. Die Vorrichtung zur Beförderung des Fliessbaren Gutes ist in Form einer Antriebstrommel 6 mit einem auf dieselbe aufgewickelten flexiblen Schlauch 7 ausgeführt. Die Trommel 6 ist auf einer Hohlwelle 8 angebracht und im Innern der luftdichten Kammer 4 angeordnet ; ihr Antrieb ist reversierbar ausgeführt und mit dem Antriebsmotor der Landmaschine (in Fig. nicht abgebildet) kinematisch verbunden. Das freie Ende des Schlauches 7 ist durch den Ausgang der Kammer 4 hindurchgeführt, nach aussen umgestülpt und am Umfang der Kammer 4 unter Bildung eines Ringraumes A hermetisch dicht befestigt. Der Innenraum B des Schlauches 7 steht mit dem Bunker 2 in Verbindung. Der letztere kann von den Innenwänden des Schlauches 7 gebildet sein. Auf dem Rahmen 1 können zusätzliche Bunker 9 (Fig. 2) montiert sein, die sich ausserhalb der Kammer 4 befinden und als Speicher für verschiedene fliessbare Güter, beispielsweise Flüssigdünger, Wasser u.ä. dienen. Die Bunker 9 sind mit dem Innenraum B des Schlauches 7 über die Hohlwelle 8 der Trommel 6 in Verbindung gesetzt. Im Innern der luftdichten Kammer 4 befindet sich ein Dosierer für die Zuführung des fliessbaren Gutes aus dem Bunker 2 (Fig. 1), der in Form eines Satzes von profilierten Rollen 10 mit Rillen 11 (Fig. 2) ausgeführt ist. Die Breite der Rillen 11 bedingt die Samenaussaatnorm. Bei der Zuführung des fliessbaren Gutes aus den zusätzlichen Bunkern 9 ist der Dosierer an der Arbeit nicht beteiligt, weil das Gut bereits dosiert ankommt. Am Schlauch 7 ist mit seinen Enden auf eine beliebige bekannte Weise ein abnehmbares Zugelement 12 (Fig. 3) befestigt, das aus zwei Zweigen bestehen kann. Das Zugelement 12 gewährleistet die Beförderung des Arbeitsorgans eines konkreten Transportbehälters 13 beim Einbringen der Ernte. Der Transportbehälter 13 weist Rollen 14 zum Umschlingen derselben durch das Zugelement 12 auf. In dieser Weise kommt die kinematische Verbindung zwischen dem Arbeitsorgan und dem Zugelement zustande.

In Fig. 4 ist eine Ausführungsform dargestellt, bei der die Maschine zusätzlich einen perforierten Schlauch 15 enthält, der koaxial zum Schlauch 7 liegt und mit einem seiner Enden an diesem befestigt ist. Das andere Ende des perforierten Schlauches 15 muss in seiner Arbeitsstellung auf der Feldoberfläche befestigt sein. Der Schlauch 15 ist zur Zuführung zu demselben eines fliessbaren Gutes, konkret von Samen, sowie zur Züchtung der Pflanzen in demselben bestimmt. Er kann nur während der Aussaat verwendet werden.

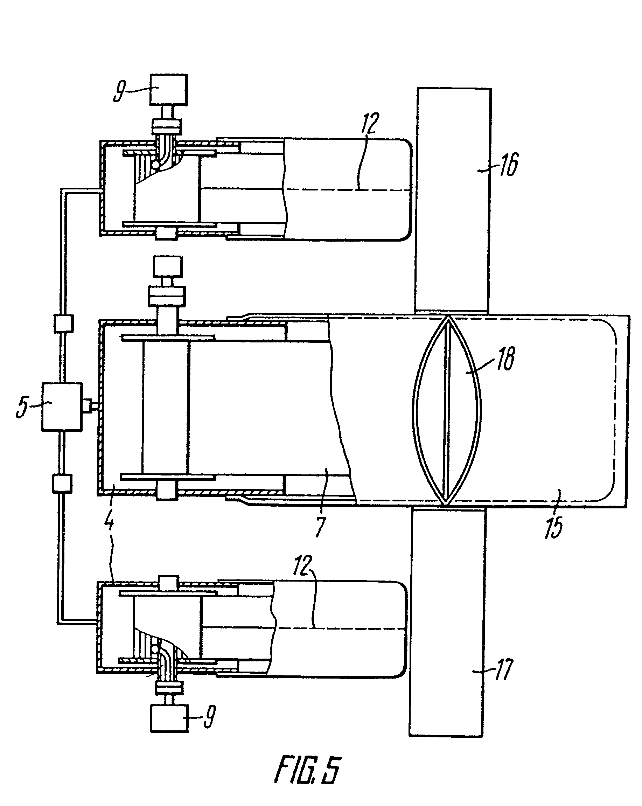

In Fig. 5 ist eine Ausführungsform der Maschine zur Durchführung von abschliessenden technologischen Operationen dargestellt, die mit der Bergung der Ernte zusammenhängen. Zur Bergung der Ernte von der Oberfläche des Schlauches 15 benutzt man den Transportbehälter 13, der aus zwei Sektionen 16, 17 besteht, die mittels eines radialen Messers 18 untereinander verbunden sind. Das Messer 18 wird in solcher Weise eingestellt, das es mit der Aussenfläche des perforierten Schlauches 15 kontaktiert. Jede der Sektionen 16, 17 wird über die Feldoberfläche genauso wie der Transportbehälter gemäss Fig. 3 bewegt. Die Maschine arbeitet folgendermassen.

Man schaltet die Arbeitsmittelquelle 5 (Fig. 1) ein und pumpt das Arbeitsmittel unter Druck in die luftdichte Kammer 4 ein. Der auf die Antriebstrommel 6 aufgewikkelte Schlauch 7 beginnt, nach aussen umgestülpt zu werden, und bewegt sich über die Feldoberfläche, indem er von der Trommel abgewickelt wird, infolge der Volumenveränderung des Ringraumes A, wobei gleichzeitig das fliessbare Gut aus dem Bunker 2 dem Arbeitsorgan 3 zugeführt wird. Die Zuführungsnorm des fliessbaren Gutes wird von der Bewegungsgeschwindigkeit des Schlauches 7 und der Breite der Rillen 11 (Fig. 2) am Dosierer bestimmt. Die Rückführung des Schlauches 7 (Fig. 1) in die Ausgangsstellung erfolgt durch Unterbindung der Arbeitsmittelzufuhr zur Kammer 4 und Reversierung der Trommel 6. Das Arbeitsmittel wird von diesem Schlauch aus den Ringräumen A des Schlauches 7 in die Quelle 5 zurück bzw. in die Atmosphäre verdrängt. Sind als fliessbares Gut Samen verwendet, so erfolgt das Wickeln des Schlauches auf die Trommel erst dann, wenn die ausgesäten Samen aufgekeimt sind. Danach erfolgt die Kopfdüngung der aufgekeimten Pflanzen und deren Begiessen aus den zusätzlichen, ausserhalb der Kammer 4 befindlichen Bunkern 9, der Dosierer ist an der Arbeit nicht beteiligt, weil die Dosierung des zugeführten Gutes die eigentlichen Bunker 9 (Fig. 2) besorgen.

Dieser Zyklus kann sich mehrmals wiederholen.

Bei Badarf sowie beim Einbringen der Ernte kann man mit Hilfe der beschriebenen Vorrichtung verschiedene Arbeitsorgane, unter anderem Transportbehälter, über die Feldoberfläche transportieren. Hierzu wird am Schlauch das Zugelement 12 (Fig. 3) befestigt und mit dem Arbeitsorgan kinematisch verbunden.

Beim Durchführen der Aussaat auf den für landwirtschaftliche Arbeiten nicht geeigneten Böden wird der zusätzliche perforierte Schlauch 15 (Fig. 4) verwendet, in den der Schlauch 7 koaxial eingeführt wird. Eines der Enden des perforierten Schlauches 15 wird am Schlauch 7, das andere Ende desselben aber auf der Feldoberfläche befestigt. Über den Schlauch 7 füllt man den Innenraum des perforierten Schlauches 15 mit dem fliessbaren Gut teilweise aus, wobei im Innern dieses Schlauches eine fruchtbare Schicht gebildet wird. In diesem Fall verwendet man als fliessbares Gut ein Gemisch aus dem im vorhinein vorbereiteten Boden und den Samen. Danach führt man den Schlauch 7 aus dem perforierten Schlauch 15 heraus. Die Samen treten, indem sie auskeimen, durch die Lochungen des Schlauches 15 mit Blättern nach aussen hinaus, wobei ihre Wurzeln in der fruchtbaren Schicht verbleiben. Nach dem Reifwerden der Ernte wird der Schlauch 7 (Fig. 5) in den perforierten Schlauch 15 erneut eingeführt, wobei die Pflanzen vom Substrat getrennt werden. Danach wird am perforierten Schlauch 15 das radiale Messer 18 angebracht und mit den Sektionen 16, 17 des Transportbehälters verbunden. Indem man den letzteren über das Feld bewegt, schneidet man mit dem radialen Messer 18 die aufgewachsenen Pflanzen von der Aussenfläche des perforierten Schlauches 15 ab. Die abgeschnittenen Pflanzen fallen in die Behältersektionen 16, 17. Die Fortbewegung des Behälters über Feld geschieht mittels des Zugelementes 12.

Gewerbliche Verwertbarkeit

Die vorliegende Erfindung kann für verschiedene landwirtschaftliche Feldarbeiten sowie für Arbeiten unter Bedingungen von steinigen bzw. nassen Böden und Berghängen angewendet werden.

**Patentansprüche**

1. Landmaschine, die einen Rahmen (1) enthält, der einen bunker (2) für ein fliessbares Gut sowie eine Vorrichtung zur Beförderung des fliessbaren Gutes zu einem Arbeitsorgan (3) für die Durchführung der technologischen Operationen auf dem Felde mitführt, dadurch **gekennzeichnet,** dass der Bunker (2) und die Vorrichtung in einer luftdichten Kammer (4) untergebracht sind, die einen Eingang und einen Ausgang besitzt, dass der Eingang mit einer Quelle (5) eines der Kammer (4) unter Druck zugeführten Arbeitsmittels in Verbindung steht, dass die Vorrichtung in Form einer Antriebstrommel (6) mit einem auf dieselbe aufgewickelten flexiblen Schlauch (7) ausgeführt ist, der in der luftdichten Kammer (4) solcherweise angeordnet ist, dass sein Innenraum (B) mit dem Bunker (2) für das fliessbare Gut in Verbindung steht, wobei das freie Ende des Schlauches (7) durch den Ausgang der Kammer (4) hindurchgeführt, nach sussen umgestülpt und am Umfang der Kammer (4) unter Bildung eines Ringraumes (A) hermetisch dicht befestigt ist, wobei der Ringraum unter der Wirkung des in demselben enthaltenen Arbeitsmittels sein Volumen verändert und das fliessbare Gut verschiebt.

2. Landmaschine nach Anspruch 1, dadurch **gekennzeichnet,** dass der Antrieb der Trommel (6) reversierbar ausgeführt ist.

3. Landmaschine nach Anspruch 1, dadurch **gekennzeichnet,** dass der Bunker (2) für das fliessbare Gut von den Innenwänden des Schlauches (7) gebildet ist.

4. Landmaschine nach Anspruch 1, dadurch **gekennzeichnet,** dass in ihr zusätzliche Bunker (9) vorhanden sind, die sich ausserhalb der luftdichten Kammer (4) befinden und mit dem Innenraum (B) des Schlauches (7) über eine Hohlwelle (8) der Trommel (6) in Verbindung gesetzt sind.

5. Landmaschine nach Anspruch 1, dadurch **gekennzeichnet,** dass am Schlauch (7) ein Zugelement (12) mit seinen Enden befestigt ist.

6. Landmaschine nach Anspruch 5, dadurch **gekennzeichnet,** dass das Zugelement (12) aus zwei Zweigen ausgeführt ist.

7. Landmaschine nach Ansprüchen 5 oder 6, dadurch **gekennzeichnet,** dass das Zugelement (12) mit dem Arbeitsorgan (3) für die Durchführung der technologischen Operationen auf dem Felde kinematisch verbunden ist, welches Arbeitsorgan in Form eines Transportbehälters (13) mit Rollen (14) ausgebildet ist, die vom Zugelement (12) umschlungen sind.

8. Landmaschine nach Anspruch 1, dadurch **gekennzeichnet,** dass sie einen zusätzlichen perforierten Schlauch (15) enthält, der koaxial zum ersten Schlauch (7) liegt und mit einem seiner Enden an demselben befestigt ist, wobei das andere Ende des perforierten Schlauches (15) in seiner Arbeitsstellung auf der Feldoberfläche befestigt ist.

9. Landmaschine nach Ansprüchen 7 oder 8, dadurch **gekennzeichnet,** dass der Transportbehälter (13) aus zwei Sektionen (16, 17) besteht, die beiderseits des Schlauches (7) angebracht und durch ein radiales Messer (18) untereinander verbunden sind, das mit der Aussenfläche des perforierten Schlauches (15) kontaktiert.

## Claims

1. An agricultural machine, comprising a frame (1) which carries a bunker (2) for a flowable material and a device for conveying the flowable material to an operating member (3) for performing the technological operations on the land, characterized in that the bunker (2) and the device are housed in an air-tight chamber (4) comprising an inlet and an outlet, the inlet is connected to a source (5) of an operating medium supplied to the chamber (4) under pressure, the device is constructed in the form of a driving drum (6) with a flexible tube (7) wound thereonto and arranged in the air-tight chamber (4) in such a way that its interior (B) is connected to the bunker (2) for the flowable material, and the free end of the tube (7) passes through the outlet of the chamber (4), is turned over towards the outside and is secured in an hermetically sealed manner to the periphery of the chamber (4) so as to form an annular space (A), the annular space changing its volume and displacing the flowable material under the action of the operating medium contained in the said annular space.

2. An agricultural machine according to Claim 1, characterized in that the drive of the drum (6) is made reversible.

3. An agricultural machine according to Claim 1, characterized in that the bunker (2) for the flowable material is formed by the inner walls of the tube (7).

4. An agricultural machine according to Claim 1, characterized in that it contains additionnal bunkers (9) which are arranged outside the air-tight chamber (4) and are connected to the interior (B) of the tube (7) by way of a hollow shaft (8) of the drum (6).

5. An agricultural machine according to Claim 1, characterized in that a traction element (12) is secured to the tube (7) by its ends.

6. An agricultural machine according to Claim 5, characterized in that the traction element (12) is formed from two arms.

7. An agricultural machine according to Claim 5 or 6, characterized in that the traction element (12) is kinemetically connected to the operating member (3) for performing the technological operations on the land, the operating member being constructed in the form of a conveying container (13) with rollers (14) around which the traction element (12) passes.

8. An agricultural machine according to Claim 1, characterized in that it comprises an additional perforated tube (15) lying coaxially with the first tube (7) and attached by one of its ends thereto, the other end of the perforated tube (15) being attached to the surface of the land in its operating position.

9. An agricultural machine according to Claim 7 or 8, characterized in that the conveying container (13) comprises two sections (16, 17) arranged on both sides of the tube (7) and connected to each other by a radial blade (18) which is in contact with the outer face of the perforated tube (15).

## Revendications

1. Machine agricole qui comporte un châssis (1) qui entraîne une trémie (2) pour une matière fluide ainsi qu'un dispositif pour la fourniture de la matière fluide à un organe de travail (3) pour l'accomplissement des opérations technologiques sur un champ, caractérisée en ce que la trémie (2) et le dispositif se trouvent dans une chambre (4) étanche à l'air, qui possède une entrée et une sortie, en ce que l'entrée est en liaison avec une source (5) d'un fluide de travail conduit sous pression à la chambre (4), en ce que le dispositif est réalisé sous la forme d'un tambour de travail (6) avec un tuyau flexible (7) qui y est enroulé, qui est agencé dans la chambre (4) étanche à l'air de manière que son espace interne (B) soit relié à la trémie (2) de la matière fluide, ainsi l'extrémité libre du tuyau flexible (7) passe à travers la sortie de la chambre (4), se déroule à l'extérieur et est fixée hermétiquement sur le pourtour de la chambre (4) en formant un espace annulaire (A), l'espace annulaire changeant de volume sous l'effet du fluide de travail qu'il contient et déplaçant la matière fluide.

2. Machine agricole selon la revendication 1, caractérisée en ce que l'entraînement du tambour (6) est réversible.

3. Machine agricole selon la revendication 1, caractérisée en ce que la trémie (2) pour la matière fluide est formée des parois internes du tuyau flexible (7).

4. Machine agricole selon la revendication 1, caractérisée en ce qu'elle contient des trémies (9) supplémentaires, qui se trouvent en dehors de la chambre étanche à l'air (4) et sont mises en liaison avec l'espace interne (B) du tuyau flexible (7) par l'intermédiaire d'un arbre creux (8) du tambour (6).

5. Machine agricole selon la revendication 1, caractérisée en ce qu'au tuyau flexible (7) est fixé un élément de traction (12), par son extrémité.

6. Machine agricole selon la revendication 5, caractérisée en ce que l'élément de traction (12) est à deux branches.

7. Machine agricole selon la revendication 5 ou 6, caractérisée en ce que l'élément de traction (12) est cinématiquement relié à l'organe de travail (3) pour l'accomplissement des opérations technologiques sur un champ, lequel organe de travail a la forme d'un récipient de transport (13) avec des rouleaux (14) qui sont entourés de l'élément de traction (12).

8. Machine agricole selon la revendication 1, caractérisée en ce qu'elle contient un tuyau flexible perforé supplémentaire (15), qui est coaxial au premier tuyau (7) et est fixé à celui-ci par l'une de ses extrémités, l'autre extrémité du tuyau flexible perforé (15) étant fixée, à sa position de travail, à la surface du champ.

9. Machine agricole selon la revendication 7 ou 8, caractérisée en ce que le récipient de transport (13) se compose de deux sections (16, 17), qui sont prévues des deux côtés du tuyau flexible (7) et qui sont reliées l'une à l'autre par une lame radiale (18), qui est en contact avec la surface externe du tuyau flexible perforé (15).

FIG. 1

FIG. 2

FIG. 3

FIG. 4

EP 0 253 898 B1

FIG. 5